# EUROPÄISCHE PATENTSCHRIFT

(11) **EP 1 798 511 B1**
(45) Veröffentlichungstag und Bekanntmachung des Hinweises auf die Patenterteilung: **24.08.2011**
(21) Anmeldenummer: 06025787.0
(22) Anmeldetag: 13.12.2006
(51) Int. Cl.: F28F 19/00

(54) **Vorrichtung zur Kühlung eines Gasstroms**
Device for cooling a gas flow
Dispositif de refroidissement d'un écoulement de gaz

(30) Priorität: 14.12.2005 DE 102005060155; 25.08.2006 DE 102006039846
(43) Veröffentlichungstag der Anmeldung: 20.06.2007
(73) Patentinhaber: Behr GmbH & Co. KG, 70469 Stuttgart (DE)
(72) Erfinder: Angermann, Hans-Heinrich, Dr.rer.nat, 70197 Stuttgart (DE); Mamber, Oliver, Dr.rer.nat., 71706 Markgröningen (DE)

(56) Entgegenhaltungen:
- DE-A1- 19 801 753

## Beschreibung

Die vorliegende Erfindung betrifft eine Vorrichtung zur Kühlung eines Gasstroms nach dem Oberbegriff des Anspruchs 1. DE-A1-19801 753 beschreibt eine derartige Vorrichtung.

Aus dem Stand der Technik sind Abgas-Wärmeübertrager bekannt. Insbesondere sind Abgaskühler bekannt, die bei Motoren von Kraftfahrzeugen zum Zwecke der Abgasrückführung eingesetzt sind. Hierbei ergibt sich allgemein die Problematik, dass sich durch die Kühlung des Abgases Ablagerungen aus Kohlenwasserstoffen, Ruß und weiteren Substanzen auf den Wänden des Wärmetauschers anhäufen. Durch diese Ablagerungen wird die Wärmeleitfähigkeit verringert, und bei entsprechender Zunahme der Ablagerungen wird der Strömungsquerschnitt verkleinert. Bisher wurden Abgas-Wärmetauscher für Kraftfahrzeuge daher so ausreichend dimensioniert, dass selbst bei Vorliegen von Ablagerungen ein ausreichender Strömungsquerschnitt für den Abgasstrom und eine ausreichende thermische Leistung der Komponenten verbleibt. Dies führt zu einer unnötigen Baugröße, die bei den beengten Verhältnissen im Motorraum von Kraftfahrzeugen, insbesondere tendenziell, unerwünscht ist. Zudem entstehen hierdurch erhöhte Kosten. Weiterhinkönnen die Ablagerungen, insbesondere in Form von korrosionsförderndem Kondensat, zu einer korrosiven Schädigung des Wärmetauschervverkstoffes bis zur Entstehung von Leckagen führen.

Es ist die Aufgabe der Erfindung, eine Vorrichtung zur Kühlung eines Gasstroms anzugeben, bei der Ablagerungen aus dem Gasstrom vermindert oder auf kontrollierte Weise automatisch entfernt werden.

Diese Aufgabe wird für eine eingangs genannte Vorrichtung erfindungsgemäß mit den kennzeichnenden Merkmalen des Anspruchs 1 gelöst. Durch die mechanischen Schwingungen, mit denen die Tauschermittel beaufschlagt werden, können die Ablagerungen teilweise oder vollständig gelöst werden. Hierdurch kann die Wärmeleitfähigkeit und somit die Wärmetauscherleistung bei gegebener Baugröße erhöht werden. Ein übermäßiger Strömungsquerschnitt zur Sicherstellung einer ausreichenden Strömung auch bei längerem Betrieb ist nicht erforderlich, da die Ablagerungen auf kontrollierte Weise entweder vollständig entfernt werden oder insoweit entfernt werden, dass sie eine bestimmte Größe nicht überschreiten.

In vorteilhafter Ausführung ist die Vorrichtung ein Abgas-Wärmetauscher eines Verbrennungsmotors, insbesondere eines Kraftfahrzeugs. Die zumeist veränderlichen Betriebsbedingungen bei Verbrennungsmotoren sowie die insbesondere beschränkten Bauräume bei Kraftfahrzeugen ergeben besondere Vorteile beim Einsatz einer erfindungsgemäßen Vorrichtung hinsichtlich der Vermeidung von Ablagerungen.

Alternativ kann die Vorrichtung auch ein Ladeluftkühler, insbesondere eines Verbrennungsmotors eines Kraftfahrzeugs, sein. Auch bei der Kühlung von verdichteter Umgebungsluft können sich Ablagerungen bilden, die über eine hohe Betriebsdauer zu beeinträchtigen führen können.

Weiterhin bevorzugt weist die Vorrichtung ein die Tauschermittel umfangendes Gehäuse auf. Insbesondere bevorzugt ist das Fluid eine in dem Gehäuse geführte Flüssigkeit. Hierdurch lässt sich insgesamt eine besonders leichte und effektive Beaufschlagung der Tauschermittel mit mechanischen Schwingungen erreichen, da sowohl das Gehäuse als auch die Flüssigkeit zur, insbesondere guten, Übertragung und Verteilung der mechanischen Schwingungen geeignet sind. Im Falle der Übertragung durch die Flüssigkeit handelt es sich regelmäßig um longitudinale Schwingungen, die auf die Tauschermittel wirken. Je nach Anforderungen kann der Schwingungsgeber dabei bevorzugt entweder innerhalb des Gehäuses oder auch außerhalb des Gehäuses angeordnet sein. Bei einer Anordnung innerhalb des Gehäuses ergibt sich eine besonders effektive Schwingungsübertragung auf die Tauschermittel, während bei einer Anordnung außerhalb des Gehäuses der Vorteil eines guten Wartungszugangs zu den Schwingungsgebern besteht.

Allgemein bevorzugt sind zur Sicherstellung einer guten Verteilung der mechanischen Schwingungen über die Tauschermittel mehrere Schwingungsgeber, insbesondere wenigstens drei Schwingungsgeber, an der Vorrichtung angeordnet.

Zur effektiven Entfemung üblicher Ablagerungen liegt der Frequenzbereich der mechanischen Schwingungen im Wesentlichen im Ultraschallbereich. Besonders bevorzugt liegt der Frequenzbereich dabei oberhalb von 30.000 Hz, bevorzugt im Bereich von 40.000 Hz. Dieser recht hohe Frequenzbereich hat den Vorteil, dass starke Kavitation, die zu einer Beschädigung der Tauschermittelwandungen führen könnte, vermieden wird.

Alternativ oder ergänzend können die mechanischen Schwingungen eine Mehrzahl von Hauptanregungsfrequenzen aufweisen. Es hat sich gezeigt, dass bei Verwendung mehrerer Anregungsfrequenzen eine besonders gute Reinigungswirkung durch mechanische Schwingungen und/oder Ultraschall erzielt werden kann.

Zur Schonung der Schwingungsgeber und des Materials der Tauschermittel sowie zur Energieeinsparung kann es bevorzugt vorgesehen sein, dass der zumindest eine Schwingungsgeber nur zeitweise in Betrieb ist, und insbesondere vorteilhaft kann es vorgesehen sein, dass er gepulst betrieben wird.

Weiterhin vorteilhaft kann es vorgesehen sein, dass der zumindest eine Schwingungsgeber in Abhängigkeit von einem über eine Messgröße feststellbaren Verschmutzungsgrad der Tauschermittel betrieben wird, so dass ein unnötiger Betrieb der Schwingungsgeber vermieden wird. Besonders bevorzugt kann die Messgröße dabei eine Druckdifferenz über der Vorrichtung sein, mittels der auf einfache Weise ein erhöhter, durch Ablagerungen bedingter Strömungswiderstand der Vorrichtung zur Kühlung eines Abgasstroms angezeigt wird.

In vorteilhafter Ausgestaltung weisen die Tauschermittel eine mit dem Abgasstrom in Kontakt stehende Berippung und/oder Einbringung von Ausprägungen wie beispielsweise Winglets, auf. Eine solche Berippung verbessert nicht nur die Wärmetauscherleistung, sondern kann auch bei geeigneter Ausformung einer Reinigung durch Beaufschlagung mit mechanischen Schwingungen Vorschub leisten.

Weiterhin bevorzugt können die Tauschermittel eine Oberflächenbehandlung zur Verringerung von Ablagerungen aufweisen, wodurch ein zu den Schwingungsgebern ergänzender Schutz gegen Ablagerungen besteht. Hierbei können die Wandungen eine Beschichtung aufweisen, beispielsweise aus Teflon oder einem anderen glatten und ausreichend temperaturfesten Material, insbesondere mit niedriger Oberflächenenergie. Alternativ oder ergänzend können die Wandungen auch im Wesentlichen poliert sein.

In einer vorteilhaften Detailausführung umfasst der Schwingungsgeber einen piezoelektrischen Kunststoff, insbesondere Polyvinylidenfluorid (PVDF). Hierdurch ist kostengünstig und auf einfache Weise eine beliebige Formgebung des Schwingungsgebers erzielbar. Alternativ oder ergänzend kann der Schwingungsgeber aber auch je nach Anforderungen eine piezoelektrische Keramik oder ein piezoelektrisches Kompositmaterial, insbesondere ein Nanokomposit aus Kunststoff und Keramikteilchen, umfassen.

In besonders bevorzugter Weiterbildung hat die Vorrichtung eine Ausformung zur lokalisierten Ansammlung der Ablagerungen, insbesondere Kondensat des Gasstroms, wobei der Schwingungsgeber im Bereich der Ansammlung der Ablagerungen angeordnet ist. Hierdurch ist eine Konzentration des Kondensats an einem Ort und eine besonders effektive Zerstäubung und Entfernung durch den Schwingungsgeber erzielt. Bevorzugt ist der Schwingungsgeber dabei im Bereich eines Austritts des Gasstroms aus den Tauschermitteln angeordnet. Dies ist zum einen bei einer Vielzahl von Konstruktionen wie z.B. Fallstrom-Anordnungen ein geometrisch besonders geeigneter Sammelort und zum anderen der Ort mit der hinsichtlich des Gasstroms niedrigsten Temperatur, was sowohl der Kondensatsammlung als auch der Funktionssicherheit des Schwingungsgebers zuträglich ist.

Zur Erlangung einer guten Schwingungsübertragung über die Ausdehung der Tauschermittel bestehen zumindest die Tauschermittel bevorzugt im wesentlichen aus einem Metall, insbesondere auf Basis von Stahl, Edelstahl oder Aluminium.

Weitere Vorteile und Merkmale der erfindungsgemäßen Vorrichtung ergeben sich aus dem nachfolgend beschriebenen Ausführungsbeispiel sowie aus den abhängigen Ansprüchen.

Nachfolgend werden bevorzugte Ausführungsbeispiele einer erfindungsgemäßen Vorrichtung beschrieben und anhand der anliegenden Zeichnungen näher erläutert.
Fig. 1 zeigt eine schematische Darstellung einer ersten Ausführungsform einer erfindungsgemäßen Vorrichtung.
Fig. 2 zeigt einen Abgas-Wärmetauscher gemäß einer zweiten Ausführungsform der Erfindung.
Fig. 3 zeigt einen Ladeluftkühler gemäß einer dritten Ausführungsform der Erfindung.

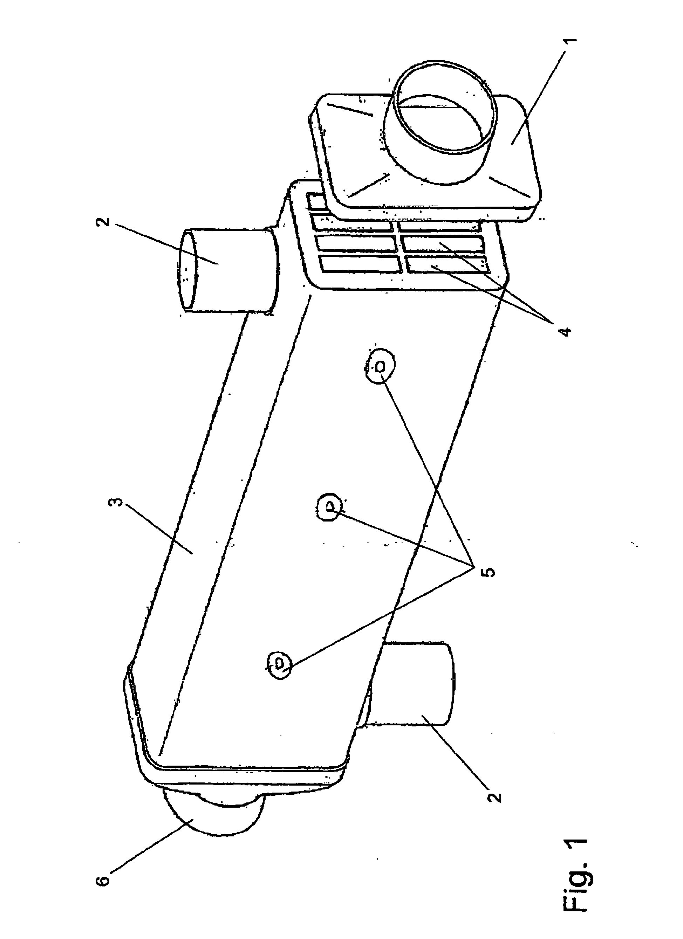

Fig. 1 zeigt einen Rohrbündel-Abgaswärmetauscher für ein Kraftfahrzeug. Der Wärmetauscher umfasst einen eingangsseitigen Diffusor 1 zur Zuführung des Abgasstroms, wonach der Abgasstrom ein Bündel von parallelen Flachrohren 4 durchströmt, an deren Innenwandungen Wärme des Abgases abgeführt wird. Die Flachrohre 4 sind über nicht näher bezeichnete Kopfstücke an einem die Flachrohre 4 umfangenden Gehäuse 3 festgelegt. Das Gehäuse 3 weist zudem Anschlüsse 2 auf, mittels derer das Gehäuse 3 mit einem flüssigen Kühlmittel durchströmbar ist. Bei dem Kühlmittel kann es sich insbesondere um das Kühlmittel eines Hauptkühlkreislaufs des Verbrennungsmotors des Kraftfahrzeugs handeln. Das Kühlmittel umströmt nungsmotors des Kraftfahrzeugs handeln. Das Kühlmittel umströmt dabei die äußeren Wandungen der Flachrohre 4, so dass die von dem Abgas an die Wandungen der Flachrohre 4 abgegebene Wärme über das Kühlmittel abgeführt wird. Nach Durchströmen der Flachrohre 4 tritt der Abgasstrom in einen auslassseitigen Diffusor 6 ein, wonach er dem Verbrennungsmotor des Kraftfahrzeugs wieder zugeführt wird.

An der Außenwandung des Gehäuses 3 sind vorliegend drei Schwingungsgeber 5 angeordnet. Bei den Schwingungsgebern 5 handelt es sich um an sich bekannte Sonotroden zur Erzeugung von mechanischen Schwingungen im Ultraschallbereich. Vorliegend ist die Hauptanregungsfrequenz der Sonotroden etwa 40.000 Hz.

### Die Erfindung funktioniert nun wie folgt:

Durch die Kühlung des die Rohre 4 durchströmenden Abgases kondensieren Kohlenwasserstoffe aus und setzen sich auf den Innenwandungen der Flachrohre 4 ab. Da diese Kondensate teilweise zähflüssig sein können, sind sie auch geeignet, Ruß- und andere Partikel aufzunehmen, so dass die Ablagerungen zumeist inhomogene Gemische sind. In regelmäßigen Abständen werden nun die Sonotroden 5 in Betrieb gesetzt. Hierdurch werden mechanische Schwingungen im Frequenzbereich um 40 kHz zunächst auf das Gehäuse 3 übertragen. Von dem Gehäuse 3 werden die Schwingungen auf das in dem Gehäuse 3 befindliche flüssige Kühlmittel übertragen. Von dem flüssigen Kühlmittel werden die Schwingungen auf die Wandungen der Flachrohre 4 übertragen. Hier führen die mechanischen Schwingungen, insbesondere auf der Abgasseite, zu einer zumindest teilweisen Ablösung der vorgenannten Ablagerungen.

Die Ablagerungen können je nach Betriebszustand des Verbrennungsmotors und Temperatur der Innenwandungen der Flachrohre, 4 und des Abgases eine unterschiedliche Konsistenz aufweisen. So kann bedingt durch die Betriebsart des Verbrennungsmotors kontrolliert vorgesehen werden, dass beispielsweise die Sonotroden dann eingeschaltet werden, wenn die Ablagerungen temperaturbedingt besonders trocken und spröde sind.

Die Flachrohre 4 sind bevorzugt mit nicht dargestellten Innenberippungen versehen. Dabei kann es sich um rippenartige Einschübe in die Flachrohre 4 handeln, die mit den Flachrohren 4 stoffschlüssig verbunden wie beispielsweise verlötet, verschweißt oder verklebt sind. In einer anderen Ausführung sind in die Flachrohre Ausprägungen wie beispielsweise Winglets, insbesondere durch ein umformendes Fertigungsverfahren wie Stanzen, Prägen Tiefziehen usw., eingebracht. Bei dem Material für den Bau von Abgaswärmetauschern, insbesondere für den Bau der Diffusoren 1, 6 und der Flachrohre 4 handelt es sich regelmäßig um Stahl, insbesondere korrosionsfesten Stahl wie etwa austenitischen Stahl.

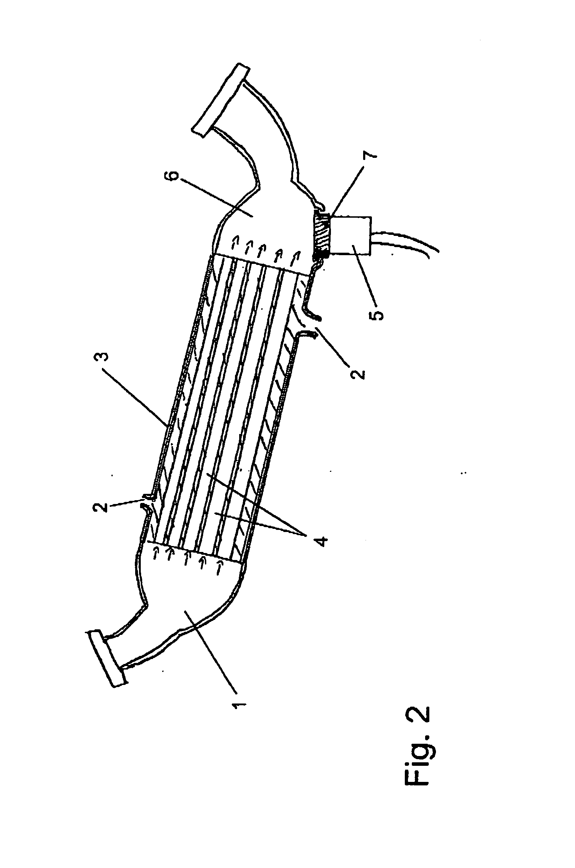

Fig. 2 zeigt ein zweites Ausführungsbeispiel, bei dem es sich wie im ersten Beispiel um einen flüssigkeitsgekühlten Abgas-Wärmetauscher handelt. In einem tiefsten Bereich des Auslassdiffusors 6 ist über eine Dichtmanschette 7 ein Schwingungseber 5 eingesetzt. Die Einbaulage des Wärmetauschers ist wie in der Zeichnung dargestellt so gewählt, dass die Tauschermittel 4 zugleich in Richtung des tiefsten Bereichs geneigte Wände bzw. Ausformungen zur Führung des anfallenden Kondensats ausbilden, so dass zumindest das fließfähige Kondensat sich in diesem Bereich sammelt. Dort wird es bei Bedarf durch den in unmittelbarer Nähe, gegebenenfalls in unmittelbarem Kontakt mit dem Kondensat positionierten Schwingungsgeber 5 zerstäubt und durch den Abgasstrom mitgerissen. Die korrosive Einwirkung des Kondensats auf die Wärmetauscherwerkstoffe wird dadurch reduziert.

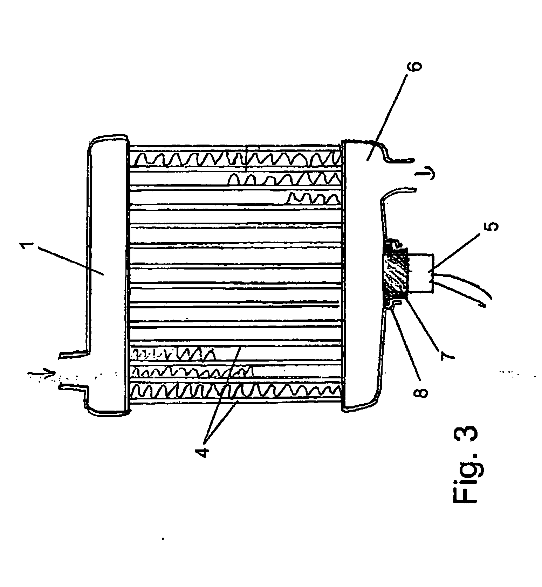

Fig. 3 zeigt einen erfindungsgemäßen Wärmetauscher, der ein Ladeluftkühler oder auch ein Niederdruck-Abgaskühler sein kann. Im Unterschied zu den ersten beiden Ausführungsbeispielen liegt kein ein flüssiges Kühlmittel führendes Gehäuse vor, sondern die Tauscherrohre 4 werden unmittelbar durch umströmende Umgebungsluft gekühlt (direkte Kühlung). Der Eintrittsbereich 1 und der Austrittsbereich 6 sind jeweils nach Art eines Sammlerkastens ausgeformt. Der Austrittsbereich 6 umfasst durch geeignete Einbaulage und Formgebung seine Wände einen Sammelbereich zur Ansammlung flüssigen Kondensats. In diesem Bereich ist in einem Durchzug 8 über eine Dichtmanschette 7 ein Schwingungsgeber 5 angeordnet. Ebenso wie im zweiten Ausführungsbeispiel kann das angesammelte Kondensat durch den geeignet positionierten Schwingungsgeber bei Bedarf zerstäubt werden. Die korrosive Einwirkung des Kondensats auf die Wärmetauscherwerkstoffe wird dadurch reduziert.

In einem anderen nicht dargestellten Ausführungsbeispiel ist der Wärmetauscher, insbesondere der Abgaswärmetauscher, aus Scheiben ausgebildet. Die Scheiben sind übereinander gestapelt. Zwischen benachbarten Scheiben sind Strömungskanäle für ein Fluid wie beispeilsweise Abgas und/oder für ein Kühlmedium wie beispielsweise Wasser oder Luft ausgebildet.

In einem anderen Ausführungsbeispiel ist der Wärmetauscher als Kühlmittelkühler und/oder als Ladeluftkühler und/oder als Ölkühler und/oder als Kondensator für eine Klimaanlage und/oder als Verdampfer für eine Klimaanlage und/oder als Gaskühler für eine Klimaanlage ausgebildet.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Vorrichtung zur Kühlung eines Gasstroms, insbesondere eines Verbrennungsmotors, umfassend
Tauschermittel (4) zur Führung eines Gasstroms, wobei die Tauschermittel (4) eine mit dem Gasstrom in Berührung stehende Wandung aufweisen, und
ein Fluid zur Umströmung der Tauschermittel (4), wobei Wärme von dem Gasstrom auf das Fluid übertragbar ist,
**dadurch gekennzeichnet,**
**dass** die Vorrichtung zumindest einen Schwingungsgeber (5) umfasst, mittels dessen zumindest Teile der Tauschermittel (4) mit mechanischen Schwingungen beaufschlagbar sind,
wobei die mechanischen Schwingungen geeignet sind, auf der Wandung haftende Ablagerungen zu lösen.

2. Vorrichtung nach Anspruch 1, **dadurch gekennzeichnet, dass** die Vor richtung ein Abgas-Wärmetauscher eines Verbrennungsmotors, insbesondere eines Kraftfahrzeugs, ist.

3. Vorrichtung nach Anspruch 1, **dadurch gekennzeichnet, dass** die Vorrichtung ein Ladeluftkühler eines Verbrennungsmotors, insbesondere eines Kraftfahrzeugs, ist.

4. Vorrichtung nach einem der vorhergehenden Ansprüche, **dadurch gekennzeichnet, dass** die Vorrichtung ein die Tauschermittel (4) umfangendes Gehäuse (3) aufweist.

5. Vorrichtung nach Anspruch 4, **dadurch gekennzeichnet, dass** das Fluid eine in dem Gehäuse (3) geführte Flüssigkeit ist.

6. Vorrichtung nach Anspruch 4 oder 5, **dadurch gekennzeichnet, dass** der zumindest eine Schwingungsgeber (5) innerhalb des Gehäuses (3) angeordnet ist.

7. Vorrichtung nach Anspruch 4 oder 5, **dadurch gekennzeichnet, dass** der zumindest eine Schwingungsgeber (5) außerhalb des Gehäuses (3) angeordnet ist.

8. Vorrichtung nach einem der vorhergehenden Ansprüche, **dadurch gekennzeichnet, dass** mehrere Schwingungsgeber (5), insbesondere wenigstens drei, an der Vorrichtung angeordnet sind.

9. Vorrichtung nach einem der vorhergehenden Ansprüche, **dadurch gekennzeichnet, dass** ein Frequenzbereich der mechanischen Schwingungen im Wesentlichen im Ultraschallbereich liegt.

10. Vorrichtung nach Anspruch 9, **dadurch gekennzeichnet, dass** der Frequenzbereich oberhalb von 30.000 Hz, bevorzugt im Bereich von 40.000 Hz liegt.

11. Vorrichtung nach einem der vorhergehenden Ansprüche, **dadurch gekennzeichnet, dass** die mechanischen Schwingungen eine Mehrzahl von Hauptanregungsfrequenzen aufweisen.

12. Vorrichtung nach einem der vorhergehenden Ansprüche, **dadurch gekennzeichnet, dass** der zumindest eine Schwingungsgeber (5) nur zeitweise in Betrieb ist, insbesondere gepulst betrieben ist.

13. Vorrichtung nach einem der vorhergehenden Ansprüche, **dadurch gekennzeichnet, dass** der zumindest eine Schwingungsgeber (5) in Abhängigkeit von einem über eine Messgröße feststellbaren Verschmutzungsgrad der Tauschermittel (4) betrieben wird.

14. Vorrichtung nach Anspruch 13, **dadurch gekennzeichnet, dass** die Messgröße eine Druckdifferenz über der Vorrichtung ist.

15. Vorrichtung nach einem der vorhergehenden Ansprüche, **dadurch gekennzeichnet, dass** die Tauschermittel (4) eine mit dem Abgasstrom in Kontakt stehende Berippung aufweisen.

16. Vorrichtung nach einem der vorhergehenden Ansprüche, **dadurch gekennzeichnet, dass** die Tauschermittel (4) eine Oberflächenbehandlung zur Verringerung von Ablagerungen aufweisen.

17. Vorrichtung nach Anspruch 16, **dadurch gekennzeichnet, dass** die Wandung der Tauschermittel (4) eine Beschichtung aufweist.

18. Vorrichtung nach Anspruch 16 oder 17, **dadurch gekennzeichnet, dass** die Wandung der Tauschermittel (4) im Wesentlichen poliert ist.

19. Vorrichtung nach einem der vorhergehenden Ansprüche, **dadurch gekennzeichnet, dass** der Schwingungsgeber (5) einen piezoelektri-schen Kunststoff, insbesondere Polyvinylidenfluorid (PVDF), umfasst.

20. Vorrichtung nach einem der vorhergehenden Ansprüche, **dadurch gekennzeichnet, dass** der Schwingungsgeber (5) eine piezoelektrische Keramik umfasst.

21. Vorrichtung nach einem der vorhergehenden Ansprüche, **dadurch gekennzeichnet, dass** der Schwingungsgeber (5) ein piezoelektrisches Kompositmaterial, insbesondere Nanokomposit, umfasst.

22. Vorrichtung nach einem der vorhergehenden Ansprüche, **dadurch gekennzeichnet, dass** die Vorrichtung eine Ausformung zur lokalisierten Ansammlung der Ablagerungen, insbesondere Kondensat des Gasstroms, aufweist, wobei der Schwingungsgeber (5) im Bereich der Ansammlung der Ablagerungen angeordnet ist.

23. Vorrichtung nach Anspruch 22, **dadurch gekennzeichnet, dass** der Schwingungsgeber (5) im Bereich eines Austritts (6) des Gasstroms aus den Tauschermitteln (4) angeordnet ist.

24. Vorrichtung nach einem der vorhergehenden Ansprüche, **dadurch gekennzeichnet, dass** zumindest die Tauschermittel (4) im Wesentlichen aus einem Metall bestehen, insbesondere auf Basis von Stahl, Edelstahl oder Aluminium.

## Claims

1. A device for cooling a gas flow, in particular of an internal combustion engine, comprising
an exchanger means (4) for guiding a gas flow, wherein the exchanger means (4) comprise a wall that is in contact with the gas flow, and
a fluid, to flow around the exchanger means (4), wherein heat can be transferred from the gas flow to the fluid, **characterized in that**
the device comprises at least one vibration generator (5) which can be used to apply mechanical vibrations to at least parts of the exchanger means (4),
wherein the mechanical vibrations are suitable for detaching deposits adhered to the wall.

2. The device according to claim 1, **characterized in that** the device is an exhaust-gas heat exchanger of an internal combustion engine, in particular of a motor vehicle.

3. The device according to claim 1, **characterized in that** the device is a charge air cooler of an internal combustion engine, in particular of a motor vehicle.

4. The device according to one of the preceding claims, **characterized in that** the device comprises a housing (3) which encloses the exchanger means (4).

5. The device according to claim 4, **characterized in that** the fluid is a liquid that is guided in the housing (3).

6. The device according to claim 4 or 5, **characterized in that** the at least one vibration generator (5) is disposed inside the housing (3).

7. The device according to claim 4 or 5, **characterized in that** the at least one vibration generator (5) is disposed outside of the housing (3).

8. The device according to one of the preceding claims, **characterized in that** a plurality of vibration generators (5), in particular three, are disposed on the device.

9. The device according to one of the preceding claims, **characterized in that** a frequency range of the mechanical vibrations is substantially in the ultrasonic range.

10. The device according to claim 9, **characterized in that** the frequency range is above 30,000 Hz, preferably in the range of 40,000 Hz.

11. The device according to one of the preceding claims, **characterized in that** the mechanical vibrations have a plurality of main stimulation frequencies.

12. The device according to one of the preceding claims, **characterized in that** the at least one vibration generator (5) operates only intermittently, in particular being operated in a pulsed manner.

13. The device according to one of the preceding claims, **characterized in that** the at least one vibration generator (5) is operated depending on a level of contamination of the exchanger means (4), which, can be determined via a measured quantity.

14. The device according to claim 13, **characterized in that** the measured quantity is a pressure differential across the device,

15. The device according to one of the preceding claims, **characterized in that** the exchanger means (4) comprises a ribbing which is in contact with the exhaust-gas flow.

16. The device according to one of the preceding claims, **characterised in that** the exchanger means (4) has a surface treatment for reducing deposits.

17. The device according to claim 16, **characterized in that** the wall of the exchanger means (4) has a coating.

18. The device according to claim 16 or 17, **characterized in that** the wall of the exchanger means (4) is substantially polished.

19. The device according to one of the preceding claims, **characterized in that** the vibration generator (5) comprises a piezoelectric plastic, in particular polyvinylidene fluoride (PVDF).

20. The device according to one of the preceding claims, **characterized in that** the vibration generator (5) comprises a piezoelectric ceramic.

21. The device according to one of the preceding claims, **characterised in that** the vibration generator (5) comprises a piezoelectric composite material, in a nanocomposite.

22. The device according to one of the preceding claims, **characterized in that** the device comprises a recess for the localized collection of deposits, in particular condensate of the gas flow, wherein the vibration generator (5) is disposed in the region of the collection of deposits.

23. The device according to claim 22, **characterized in that** the vibration generator (5) is disposed in the region of an outlet (6) of the gas flow out of the exchanger means (4).

24. The device according to one of the preceding claims, **characterized in that** at least the exchanger means (4) is composed substantially of a metal, in particular on the basis of steel, stainless steel, or aluminum.

## Revendications

1. Dispositif de refroidissement d'un flux de gaz, en particulier d'un moteur à combustion interne, comprenant :
- des moyens échangeurs (4) servant au guidage d'un flux de gaz, où les moyens échangeurs (4) présentent une paroi en contact avec le flux de gaz, et
- un fluide servant à circuler autour des moyens échangeurs (4), où de la chaleur provenant du flux de gaz peut être transmise au fluide,
**caractérisé en ce que** le dispositif comprend au moins un émetteur de vibrations (5) à l'aide duquel au moins des parties des moyens échangeurs (4) peuvent être sollicitées par des vibrations mécaniques,
où les vibrations mécaniques sont appropriées pour der dépôts adhérant sur la paroi.

2. Dispositif selon la revendication 1, **caractérisé en ce que** le dispositif est un échangeur de chaleur de gaz d'échappement d'un moteur à combustion interne, en particulier d'un véhicule automobile.

3. Dispositif selon la revendication 1, **caractérisé en ce que** le dispositif est un refroidisseur d'air de suralimentation d'un moteur à combustion interne, en particulier d'un véhicule automobile.

4. Dispositif selon l'une quelconque des revendications précédentes, **caractérisé en ce que** le dispositif présente un carter (3) entourant les moyens échangeurs (4).

5. Dispositif selon la revendication 4, **caractérisé en ce que** le fluide est un liquide guidé dans le carter (3).

6. Dispositif selon la revendication 4 ou 5, **caractérisé en ce que** l'émetteur de vibrations (5) au moins au nombre de un est disposé à l'intérieur du carter (3).

7. Dispositif selon la revendication 4 ou 5, **caractérisé en ce que** l'émetteur de vibrations (5) au moins au nombre de un est disposé à l'extérieur du carter (3).

8. Dispositif selon l'une quelconque des revendications précédentes, **caractérisé en ce que** plusieurs émetteurs de vibrations (5), en particulier au moins trois, sont disposés sur le dispositif.

9. Dispositif selon l'une quelconque des revendications précédentes, **caractérisé en ce qu'**une plage de fréquences des vibrations mécaniques se situe essentiellement dans la plage des ultrasons.

10. Dispositif selon la revendication 9, **caractérisé en ce que** la plage de fréquences est supérieure à 30.000 Hz, de préférence dans la plage de 40.000 Hz.

11. Dispositif selon l'une quelconque des revendications précédentes, **caractérisé en ce que** les vibrations mécaniques présentent une pluralité de fréquences d'excitation principales.

12. Dispositif selon l'une quelconque des revendications précédentes, **caractérisé en ce que** l'émetteur de vibrations (5) au moins au nombre de un est en fonctionnement seulement par moments, est actionné en particulier par impulsions.

13. Dispositif selon l'une quelconque des revendications précédentes, **caractérisé en ce que** l'émetteur de vibrations (5) au moins au nombre de un est actionné en fonction d'un degré d'encrassement des moyens échangeurs (4), pouvant être constaté par une grandeur mesurés.

14. Dispositif selon la revendication 13, **caractérisé en ce que** la grandeur mesurée est une différence de pression au-delà du dispositif.

15. Dispositif selon l'une quelconque des revendications précédentes, **caractérisé en ce que** les moyens échangeurs (4) présentent un ensemble d'ailettes en avec le flux de gaz d'échappement.

16. Dispositif selon l'une quelconque des revendications précédentes, **caractérisé en ce que** les moyens échangeurs (4) présentent un traitement de surface servant à diminuer les dépots.

17. Dispositif selon la revendication 16, **caractérisé en ce que** la paroi des moyens échangeurs (4) présente un revêtement.

18. Dispositif selon la revendication 16 ou 17, **caractérisé en ce que** la paroi des moyens échangeurs (4) est essentiellement polie.

19. Dispositif selon l'une quelconque des revendications précédentes, **caractérisé en ce que** l'Émetteur de vibrations (5) comprend une matière plastique piézoélectrique, en particulier du fluorure de polyvinylidène (PVDF).

20. Dispositif selon l'une quelconque des revendications précédentes, **caractérisé en ce que** l'émetteur de vibrations (5) comprend une céramique piézoélectrique.

21. Dispositif selon l'une quelconque des revendications précédentes, **caractérisé en ce que** l'émetteur de vibrations (5) est un matériau composite piézoélectrique, en particulier un nanocomposite.

22. Dispositif selon l'une quelconque des revendications précédentes, **caractérisé en ce que** le dispositif présente un moulage pour l'accumulation localisée des dépôts, en particulier un condensat du flux de gaz, où l'émetteur de vibrations (5) est disposé dans la zone de l'accumulation des dépôts.

23. Dispositif selon la revendication 22, **caractérisé en ce que** l'émetteur de vibrations (5) est disposé dans la zone d'une sortie (6) du flux de gaz provenant des moyens échangeurs (4).

24. Dispositif selon l'une quelconque des revendications précédentes, **caractérisé en ce qu'**au moins les moyens échangeurs (4) se composent essentiellement d'un métal, en particulier à base d'acier, d'acier spécial ou d'aluminium.
